# EUROPEAN PATENT APPLICATION

(11) **EP 4 819 076 A1**
(43) Date of publication of application: **07.10.2026**
(21) Application number: 26166011.2
(22) Date of filing: 19.03.2026
(51) Int. Cl.: G06V 20/59

(54) **MONITORING DEVICE**

(30) Priority: 31.03.2025 JP 2025058350
(71) Applicant: AISIN CORPORATION, Kariya, Aichi 448-8650 (JP)
(72) Inventor: TOMOSUE, Kazuhiro, Kariya, Aichi, 448-8650 (JP); OSUMI, Hayata, Kariya, Aichi, 448-8650 (JP)
(74) Representative: TBK

(57) **Abstract**

A monitoring device (20) according to the present disclosure includes an acquisition unit (42), a face detection unit (44), a determination unit (46), a monitoring unit (48), and a warning unit (52). The acquisition unit (42) acquires image data obtained by capturing the interior of the vehicle (10) with a camera (24) provided in the interior of the vehicle (10). The face detection unit (44) detects a face of a person present in the interior of the vehicle (10) from the image data. The determination unit (46) determines whether the detected face is a face viewed from a predetermined side, which is one of a right face viewed from the right front side or a left face viewed from the left front side. When the detected face is determined to be a face viewed from the predetermined side, the monitoring unit (48) determines that the detected face is a face of a driver and monitors the state of the driver. When the detected face is determined not to be a face viewed from the predetermined side, the warning unit (52) outputs a warning.

## Description

### TECHNICAL FIELD

The present disclosure relates to a monitoring device.

### BACKGROUND DISCUSSION

Conventionally, a driver monitoring system is known. A driver monitoring system captures an image of a driver with a camera, monitors, for example, a line-of-sight direction of the driver, a face orientation of the driver, and the like in real time from the captured driver image, detects inattentiveness, fatigue, drowsiness, or the like of the driver based on the line-of-sight direction, the face orientation, and the like, and outputs a warning at an early stage.

There is also known a mirror-integrated driver monitoring system in which a camera is provided on a rearview mirror. Since the mirror-integrated driver monitoring system is provided separately from the vehicle system, the processing load of the vehicle system can be reduced. Moreover, the mirror-integrated driver monitoring system can be externally attached to a vehicle on which the driver monitoring system is not mounted.

Japanese Patent Application Publication (Translation of PCT Application) No.2022-517152 describes a technique for distinguishing a driver and an occupant in an image captured inside a vehicle, based on image coordinates. WO 2021/001942 describes a technique for preventing an occupant other than a driver from being erroneously recognized as a face of a driver by changing the size or position of a face recognition area based on a drawn-out length of a seat belt of a seat other than a driver's seat. Japanese Patent Application Publication No. 2020-157938 describes a technique of detecting a line of sight, a face orientation, and a hand of a vehicle occupant to identify the occupant who operates an operation device inside the vehicle.

An orientation of a rearview mirror is adjusted as appropriate by the driver such that an image of an area behind the vehicle is reflected on a mirror surface from the driver's viewpoint. The rearview mirror may be unintentionally changed in orientation due to contact of a person, for example. For this reason, in the mirror-integrated driver monitoring system, a face of a person who is not a driver may be included in an image captured by a camera provided on the rearview mirror, or the faces of a plurality of persons may be included in the image. In such a case, the mirror-integrated driver monitoring system may erroneously monitor a person other than the driver.

A need thus exists for a monitoring device that is capable of preventing erroneous monitoring of a person other than a driver, and giving a warning to the driver when the face of the driver cannot be detected.

### SUMMARY

A monitoring device according to the present disclosure includes an acquisition unit, a face detection unit, a determination unit, a monitoring unit, and a warning unit. The acquisition unit acquires image data obtained by capturing the interior of the vehicle with a camera provided in the interior of the vehicle. The face detection unit detects a face of a person present in the interior of the vehicle from the image data. The determination unit determines whether the detected face is a face viewed from a predetermined side, which is one of a right face viewed from the right front side or a left face viewed from the left front side. When the detected face is determined to be a face viewed from the predetermined side, the monitoring unit determines that the detected face is a face of a driver and monitors the state of the driver. When the detected face is determined not to be a face viewed from the predetermined side, the warning unit outputs a warning.

According to the monitoring device of the present disclosure, it is possible to prevent erroneous monitoring of a person other than a driver, and give a warning to the driver when the face of the driver cannot be detected.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating an external appearance of a vehicle according to an embodiment;
Fig. 2 is a diagram illustrating a configuration of a driver monitoring system;
Fig. 3 is a diagram illustrating a functional configuration of an ECU according to the embodiment;
Fig. 4 is a flowchart illustrating a processing flow of the ECU according to the embodiment;
Fig. 5 is a view illustrating an example of a left face; and
Fig. 6 is a view illustrating an example of a right face.

### DETAILED DESCRIPTION

Hereinafter, a vehicle 10 according to an embodiment will be described with reference to the drawings.

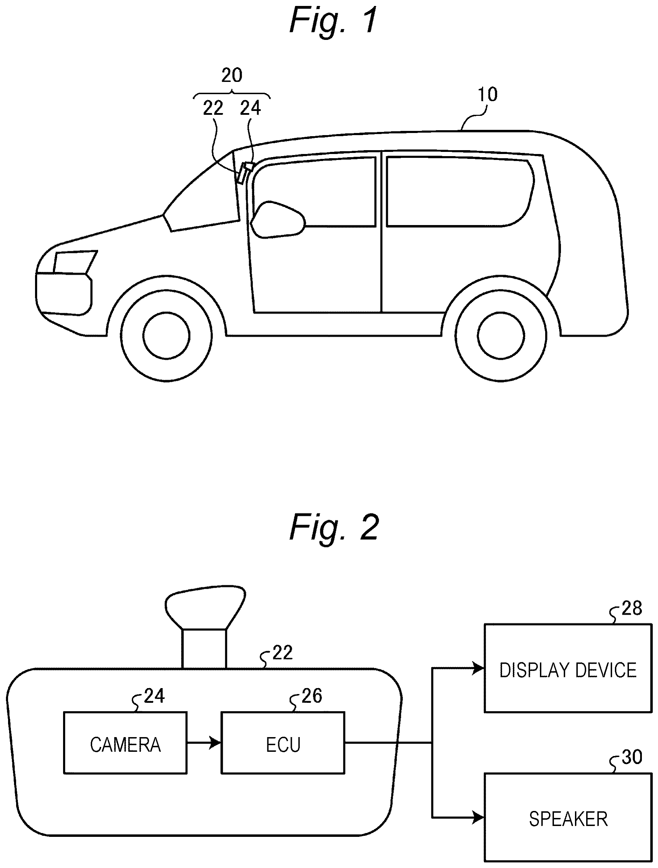

Fig. 1 is a diagram illustrating an external appearance of the vehicle 10 according to an embodiment.

The vehicle 10 includes a mirror-integrated driver monitoring system 20. The mirror-integrated driver monitoring system 20 is a monitoring device that monitors a state of a driver. In the mirror-integrated driver monitoring system 20, a camera 24 provided on a rearview mirror 22 captures an image of the driver seated on a driver's seat. The mirror-integrated driver monitoring system 20 monitors a line-of-sight direction of the driver, a face orientation of the driver, and the like in real time from the captured image data, and detects, for example, inattentiveness, fatigue, drowsiness, or the like of the driver based on the line-of-sight direction and the face orientation. When detecting inattentiveness, fatigue, drowsiness, or the like of the driver, the mirror-integrated driver monitoring system 20 notifies the driver of detection information. Such a mirror-integrated driver monitoring system 20 can provide early notification of inattentiveness, fatigue, drowsiness, or the like of the driver.

The rearview mirror 22 has a mirror surface that reflects an image behind the vehicle 10. The rearview mirror 22 is provided at a position in a front portion of the interior of the vehicle 10 where the mirror surface is viewable by a person seated in the driver's seat of the vehicle 10. The orientation of the rearview mirror 22 can be changed. As a result, the rearview mirror 22 enables the driver to check an object behind the vehicle 10 via the mirror surface regardless of the height or orientation of the driver seated in the driver's seat.

Fig. 2 is a diagram illustrating the configuration of the driver monitoring system 20.

The driver monitoring system 20 includes a camera 24, an electronic control unit (ECU) 26, a display device 28, and a speaker 30.

The camera 24 is provided on the rearview mirror 22. The camera 24 is fixed to the rearview mirror 22, and captures an image of the driver seated in the driver's seat from the rearview mirror 22. The camera 24 provides image data obtained by capturing the driver to the ECU 26. Note that the camera 24 may be provided at a place other than the rearview mirror 22 as long as the face of the driver can be captured.

The ECU 26 is incorporated in the rearview mirror 22. The ECU 26 is an information processing device, and executes a program stored in advance. The ECU 26 acquires image data from the camera 24. The ECU 26 detects a line-of-sight direction of the driver, a face orientation of the driver, and the like from the acquired image data. The ECU 26 detects the state of the driver, for example, inattentiveness, fatigue, drowsiness, or the like of the driver, based on the corrected line-of-sight direction, face orientation, and the like. When detecting inattentiveness, fatigue, drowsiness, or the like of the driver, the ECU 26 outputs detection information from the display device 28 or the speaker 30.

The display device 28 is provided outside the rearview mirror 22. The display device 28 may be, for example, a monitor device provided in a navigation system or a monitor device provided in a control panel of the vehicle 10. The display device 28 outputs detection information output from the ECU 26.

The speaker 30 may be provided outside the rearview mirror 22 or on the rearview mirror 22. When the speaker 30 is provided outside the rearview mirror 22, for example, a speaker device provided in a navigation system or a speaker device provided on a control panel of the vehicle 10 may be used. The speaker 30 outputs detection information output from the ECU 26.

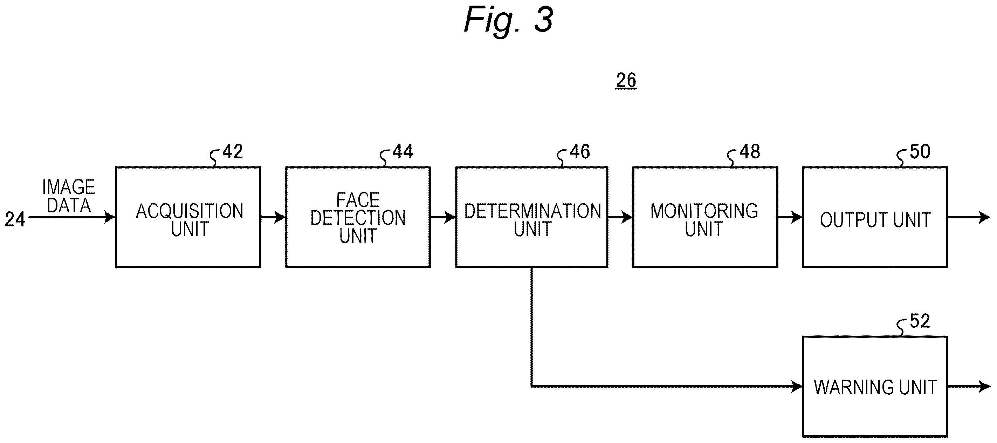

Fig. 3 is a diagram illustrating the functional configuration of the ECU 26 according to the embodiment.

The ECU 26 functions as an acquisition unit 42, a face detection unit 44, a determination unit 46, a monitoring unit 48, an output unit 50, and a warning unit 52 by executing a program.

The acquisition unit 42 acquires image data obtained by capturing the interior of the vehicle 10 with the camera 24.

The face detection unit 44 detects a face of a person present in the interior of the vehicle 10 from the image data acquired by the acquisition unit 42. When the image data includes faces of a plurality of persons, the face detection unit 44 detects one face around the driver's seat of the vehicle 10 from among the faces of the plurality of persons.

The determination unit 46 determines whether the face detected by the face detection unit 44 is a face viewed from a predetermined side, which is one of a right face viewed from the right front side or a left face viewed from the left front side. For example, when the camera 24 is provided on the rearview mirror 22 and the driver's seat in which the driver is seated is present on the right side of the front row of the vehicle 10, the determination unit 46 determines whether the detected face is a left face. For example, when the camera 24 is provided on the rearview mirror 22 and the driver's seat is present on the left side of the front row of the vehicle 10, the determination unit 46 determines whether the detected face is a right face. Accordingly, the determination unit 46 can determine whether the face detected by the face detection unit 44 is the face of the driver.

The determination unit 46 may further determine whether the detected face is a face of a person seated in the driver's seat of the vehicle 10. For example, the determination unit 46 performs image analysis on the image data to detect feature points representing interior fittings such as a seat and a headrest in the interior of the vehicle 10, and determines whether the detected face is the face of the person seated in the driver's seat of the vehicle 10 based on a relationship between positions of the feature points and a position of the detected face.

When the determination unit 46 determines that the detected face is a face viewed from the predetermined side, the monitoring unit 48 determines that the detected face is the face of the driver and monitors the state of the driver. Alternatively, when the determination unit 46 determines that the detected face is a face viewed from the predetermined side and is the face of the person seated in the driver's seat of the vehicle 10, the monitoring unit 48 may monitor the state of the driver on the assumption that the detected face is the face of the driver. For example, the monitoring unit 48 monitors the line-of-sight direction of the driver, the face orientation of the driver, and the like in real time from the captured image data, and detects inattentiveness, fatigue, drowsiness, or the like of the driver based on the line-of-sight direction, the face orientation, and the like.

When the monitoring unit 48 detects inattentiveness, fatigue, drowsiness, or the like of the driver, the output unit 50 outputs detection information from the display device 28 or the speaker 30. As a result, the output unit 50 can notify the driver that inattentiveness, fatigue, drowsiness, or the like has occurred.

The warning unit 52 outputs a warning from the display device 28 or the speaker 30 when the determination unit 46 determines that the detected face is not a face viewed from the predetermined side. Alternatively, the warning unit 52 may output a warning from the display device 28 or the speaker 30 when the detected face is not a face viewed from the predetermined side by the determination unit 46 or when the detected face is not the face of the person seated in the driver's seat of the vehicle 10. Accordingly, the warning unit 52 can notify the driver of a warning when, for example, the face of the driver is not captured by the camera 24 fixed to the rearview mirror 22 because the rearview mirror 22 is not in an appropriate orientation. This enables the driver to adjust the orientation of the rearview mirror 22 such that the face of the driver is properly captured by the camera 24.

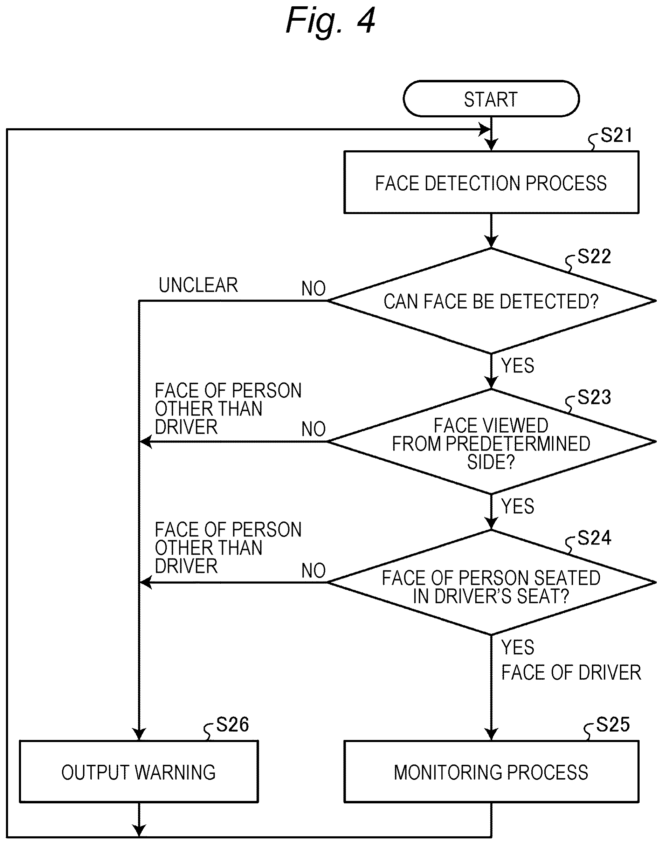

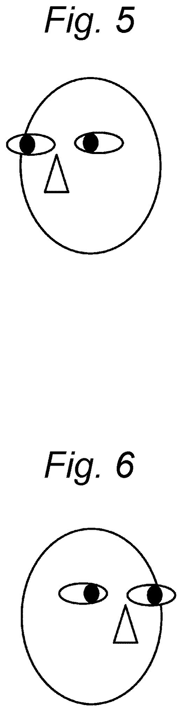

Fig. 4 is a flowchart illustrating a processing flow of the ECU 26 according to the embodiment. Fig. 5 is a diagram illustrating an example of a left face. Fig. 6 is a diagram illustrating an example of a right face.

For example, the driver monitoring system 20 executes the processes from S21 to S26, at predetermined time intervals or each time a predetermined event occurs, such as a change in the orientation of the rearview mirror 22.

First, in S21, the ECU 26 acquires image data obtained by capturing the interior of the vehicle 10 with the camera 24. Then, the ECU 26 detects a face of a person present in the interior of the vehicle 10 from the acquired image data. When the image data includes faces of a plurality of persons, the ECU 26 detects one of the faces of the plurality of persons around the driver's seat of the vehicle 10. For example, the ECU 26 performs image analysis on the image data to detect feature points representing interior fittings such as a seat and a headrest in the interior of the vehicle 10, and detects one face around the driver's seat from a positional relationship with the positions of the feature points.

Subsequently, in S22, the ECU 26 determines whether a face can be detected from the image data. When a face cannot be detected from the image data (No in S22), the ECU 26 determines that it is unclear whether a person is present in the interior of the vehicle 10, and advances the process to S26. When a face can be detected from the image data (Yes in S22), the ECU 26 advances the process to S23.

In S23, the ECU 26 determines whether the detected face is a face viewed from a predetermined side, which is one of a right face viewed from the right front side or a left face viewed from the left front side. For example, when the camera 24 is provided on the rearview mirror 22 and the driver's seat in which the driver is seated is present on the right side of the front row of the vehicle 10, the face viewed from the predetermined side is a left face. Therefore, in this case, the ECU 26 determines whether the detected face is a left face. For example, when the camera 24 is provided on the rearview mirror 22 and the driver's seat is present on the left side of the front row of the vehicle 10, the face viewed from the predetermined side is a right face. Therefore, in this case, the ECU 26 determines whether the detected face is a right face.

For example, the ECU 26 may identify whether the detected face is a right face or a left face based on a positional relationship between feature points such as eyes and a nose in the detected face. For example, when the eyes and the nose are located on the left side from the center of the face as illustrated in Fig. 5, the ECU 26 identifies the detected face as a left face. Further, for example, as illustrated in Fig. 6, when the eyes and the nose are located on the right side from the center of the face, the ECU 26 identifies the detected face as a right face.

When determining that the detected face is not a face viewed from the predetermined side, which is one of a right face viewed from the right front side or a left face viewed from the left front side (No in S23), the ECU 26 determines that the detected face is a face of a person other than the driver and advances the process to S26. When determining that the detected face is a face viewed from the predetermined side, which is one of a right face or a left face (Yes in S23), the ECU 26 advances the process to S24.

In S24, the ECU 26 determines whether the detected face is the face of the person seated in the driver's seat of the vehicle 10. For example, the ECU 26 performs image analysis on the image data to detect feature points representing interior fittings such as a seat and a headrest in the interior of the vehicle 10, and determines whether the detected face is the face of the person seated in the driver's seat of the vehicle 10 based on a relationship between positions of the feature points and a position of the detected face.

When determining that the detected face is not the face of the person seated in the driver's seat of the vehicle 10 (No in S24), the ECU 26 determines that the detected face is a face of a person other than the driver and advances the process to S26. When determining that the detected face is the face of the person seated in the driver's seat of the vehicle 10 (Yes in S24), the ECU 26 advances the process to S25.

In S25, the ECU 26 determines that the detected face is the face of the driver, and continuously executes a monitoring process for monitoring the state of the driver. For example, the ECU 26 monitors the line-of-sight direction of the driver, the face orientation of the driver, and the like in real time from the captured image data, and detects inattentiveness, fatigue, drowsiness, or the like of the driver based on the line-of-sight direction and the face orientation. When detecting inattentiveness, fatigue, drowsiness, or the like of the driver, the ECU 26 outputs detection information from the display device 28 or the speaker 30. Then, the ECU 26 returns the process to S21 while continuing the monitoring process, and repeats the process from S21 after a predetermined time or after a predetermined event occurs.

In step S26, the ECU 26 outputs, from the display device 28 or the speaker 30, a warning indicating that the monitoring process for the state of the driver is not being executed properly. After outputting the warning, the ECU 26 returns the process to S21, and repeats the process from S21 after a predetermined time or after a predetermined event occurs. In this case, the ECU 26 may continuously output the warning until the monitoring process in S25 is properly started.

As described above, when the face detected from the image data captured by the camera 24 is determined to be a face viewed from the predetermined side, the driver monitoring system 20 according to the present embodiment monitors the state of the driver on the assumption that the detected face is the face of the driver, and outputs a warning when the detected face is determined not to be a face viewed from the predetermined side. Thus, according to the driver monitoring system 20 of the present embodiment, it is possible to prevent erroneous monitoring of a person other than a driver, and give a warning to the driver when the face of the driver cannot be detected.

In the present embodiment, the camera 24 is fixed to the rearview mirror 22. Therefore, the orientation of the rearview mirror 22 may be adjusted, or a person or the like may come into contact with the rearview mirror 22 to change the orientation of the rearview mirror 22. Even in such a case, the driver monitoring system 20 according to the present embodiment gives a warning to the driver when the face of the driver cannot be detected, thereby enabling the driver to adjust the orientation of the rearview mirror 22 again.

The driver monitoring system 20 according to the present embodiment monitors the state of the driver on the assumption that the detected face is the face of the driver viewed from the predetermined side when the detected face is determined to be the face of the person seated in the driver's seat of the vehicle 10, and outputs a warning when the detected face is not a face viewed from the predetermined side or when the detected face is not the face of the person seated in the driver's seat of the vehicle 10. Thus, the driver monitoring system 20 according to the present embodiment can reliably monitor the state of the driver without erroneously monitoring the face of another person looking in the same direction as the driver in the interior of the vehicle 10.

When the image data includes faces of a plurality of persons, the driver monitoring system 20 according to the present embodiment detects one face around the driver's seat of the vehicle 10. Thus, according to the driver monitoring system 20 of the present embodiment, even when there are a plurality of persons in the interior of the vehicle 10, the driver can be reliably identified from among the plurality of persons, and the state of the driver can be reliably monitored.

Although the embodiment of the present disclosure has been described above, the embodiment has been presented as an example, and is not intended to limit the scope of the disclosure. The embodiment can be variously modified.

## Claims

1. A monitoring device (20) comprising:
an acquisition unit (42) that acquires image data obtained by capturing an interior of a vehicle (10) with a camera (24) provided in the interior of the vehicle (10);
a face detection unit (44) that detects a face of a person present in the interior of the vehicle (10) from the image data;
a determination unit (46) that determines whether the detected face is a face viewed from a predetermined side, the face being one of a right face viewed from a right front side or a left face viewed from a left front side;
a monitoring unit (48) that, when the detected face is determined to be a face viewed from the predetermined side, determines that the detected face is a face of a driver and monitors a state of the driver; and
a warning unit (52) that outputs a warning when the detected face is determined not to be a face viewed from the predetermined side.

2. The monitoring device (20) according to Claim 1, wherein
the determination unit (46) determines whether the detected face is a face of a person seated in a driver's seat of the vehicle (10),
when the detected face is determined to be a face viewed from the predetermined side and to be the face of the person seated in the driver's seat of the vehicle (10), the monitoring unit (48) determines that the detected face is the face of the driver and monitors a state of the driver, and
when the detected face is not a face viewed from the predetermined side, or when the detected face is not the face of the person seated in the driver's seat of the vehicle (10), the warning unit (52) outputs the warning.

3. The monitoring device (20) according to Claim 1, wherein
the face detection unit (44) detects one face around a driver's seat of the vehicle (10) when the image data includes faces of a plurality of persons.

4. The monitoring device (20) according to Claim 1, wherein
the camera (24) is fixedly provided on a rearview mirror (22), and
the rearview mirror (22) is provided at a position in a front portion of the interior of the vehicle (10) where a mirror surface is viewable by a person seated in a driver's seat of the vehicle (10), and an orientation of the rearview mirror (22) is changeable.
